# EUROPÄISCHE PATENTANMELDUNG

(11) **EP 4 125 076 A1**
(43) Veröffentlichungstag der Anmeldung: **01.02.2023**
(21) Anmeldenummer: 22185160.3
(22) Anmeldetag: 15.07.2022
(51) Int. Cl.: G09B 23/32, G01M 17/007

(54) **ANTHROPOMORPHE TESTVORRICHTUNG MIT SCHULTERANORDNUNG, VERWENDUNG EINER SOLCHEN TESTVORRICHTUNG UND HERSTELLUNG EINER SCHULTERANORDNUNG FÜR EINE ANTHROPOMORPHE TESTVORRICHTUNG**

(30) Priorität: 30.07.2021 EP 21188966
(71) Anmelder: Kistler Holding AG, 8408 Winterthur (CH)
(72) Erfinder: Warkentin, Thomas, 69253 Heiligkreuzsteinach (DE); Griesemann, Jost Einar, 68782 Brühl (DE); Schmitt, Alexander, 69434 Hirschhorn (DE)

(57) **Zusammenfassung**

Die Erfindung betrifft eine anthropomorphe Testvorrichtung (1), kurz Testvorrichtung (1), wobei die Testvorrichtung (1) eine Wirbelsäulenanordnung (2) aufweist; wobei sich die Wirbelsäulenanordnung (2) weitgehend entlang einer Wirbelsäulenachse (Z) erstreckt; wobei die Testvorrichtung (1) mindestens eine Schlüsselbeinanordnungen (3) aufweist; wobei die Testvorrichtung (1) mindestens eine Armanordnung (4) aufweist; wobei sich die Schlüsselbeinanordnung (3) weitgehend radial zur Wirbelsäulenanordnung (2) erstreckt; wobei die Armanordnung (4) von der Wirbelsäulenanordnung (2) radial beabstandet ist; wobei die Testvorrichtung (1) eine Schulteranordnung (5) aufweist; wobei die Schulteranordnung (5) mit der Schlüsselbeinanordnung (3) verbunden ist; wobei die Schulteranordnung (5) angrenzend an die Armanordnung (4) angeordnet ist; wobei die Schulteranordnung (5) einen zur Wirbelsäulenanordnung (2) proximalen Bereich (6) aufweist; wobei die Schulteranordnung (5) einen zur Wirbelsäulenanordnung (2) distalen Bereich (9) aufweist; wobei die Schulteranordnung (5) einen Gurtbereich (8) aufweist; wobei der Gurtbereich (8) zwischen proximalen Bereich (6) und distalen Bereich (9) angeordnet ist; und wobei die Elastizität des Gurtbereichs (8) verschieden ist von der Elastizität des distalen Bereich (9).

## Beschreibung

### Technisches Gebiet

Die Erfindung betrifft eine anthropomorphe Testvorrichtung mit Schulteranordnung. Die Erfindung betrifft auch die Verwendung einer solchen Testvorrichtung. Zudem betrifft die Erfindung die Herstellung einer Schulteranordnung für eine anthropomorphe Testvorrichtung.

### Stand der Technik

Anthropomorphe Testvorrichtungen werden meist für sogenannte Crash-Tests von Fahrzeugen genutzt. Die anthropomorphe Testvorrichtung hilft dabei den Einfluss eines Aufpralls eines des Fahrzeuges auf einen im Fahrzeug befindlichen Menschen zu erfassen. Dafür ist in Crash-Tests anstatt einen Menschen eine mit Sensoren ausgestattete anthropomorphe Testvorrichtung im Fahrzeug angeordnet. Die anthropomorphe Testvorrichtung ist dafür zumindest teilweise in Form oder Form und Gewicht einem Menschen nachempfunden.

Eine Anthropomorphe Testvorrichtung, im Folgenden auch kurz Testvorrichtung, ist bereits seit vielen Jahren bekannt und wird allgemein auch als Crash-Test-Dummy bezeichnet. Eine Art von Testvorrichtung ist als THOR Dummy bekannt. Eine Testvorrichtung ist oftmals mit einer Vielzahl von Sensoren bestückt, welche eine oder mehrere physikalische Grössen in der Testvorrichtung oder in Teilen der Testvorrichtung erfassen. Im Folgenden werden Teile oder Bereiche der Testvorrichtung mit Bezeichnungen von Körperteilen oder Körperregionen eines Menschen genannt. Es versteht sich, dass in der dem menschlichen Körper nachgebildeten Testvorrichtung ein derart bezeichnetes Körperteil ebenso wie im menschlichen Körper angeordnet ist.

Die Testvorrichtung ist im Allgemeinen vor einem Aufprall des zu testenden Fahrzeuges nach den Vorgaben einer Testbeschreibung im Fahrzeug positioniert, meist gleich der Position eines Mensch. Die Testbeschreibung ist durch staatliche Regularien vorgegeben. Die Testvorrichtung soll sich während des Aufpralls möglichst gleich einem menschlichen Körper verhalten. Dafür weist eine Testvorrichtung biomechanische Komponenten auf, die sich im Aufprall möglichst gleich entsprechenden Elementen in einem menschlichen Körper verhalten sollen. Biomechanische Komponenten sind beispielsweise Arme mit Ellenbogengelenken, Wirbelsäule mit dem Bereich der Halswirbelsäule, welche einen Kopf hält, ein Brustkorb, oder eine Schulter.

Eine Testvorrichtung ist vor einem Aufprall oftmals mit einem sogenannten Dreipunktgurt sitzend auf einem Sitz in einem Fahrzeug angeordnet. Das Gurtband eines Dreipunktgurts ist üblicherweise an drei Punkten an eine Fahrzeugkarosserie fixiert: Ein Punkt meist im unteren Bereich der B-Säule, ein weiterer Punkt ist das sogenannte Gurtschloss und ein dritter Anbindungspunkt ist meist der obere Teil der B-Säule. Das Gurtband wird vom ersten Punkt über das Becken der Testvorrichtung zum zweiten Punkt geführt und vom zweiten Punkt quer über den Brustkorb über die Schulter zum dritten Punkt. Ein Gurt wird oft auch als Rückhaltegurt oder Sicherheitsgurt bezeichnet. Ein angelegter Gurt verläuft über die Schulter eines mit dem Gurt im Fahrzeug gesicherten Menschen. Analog verläuft ein angelegter Gurt im Sinne der Erfindung über eine Schulteranordnung der Testvorrichtung.

Ein Fahrzeug kann auch ein sogenannter Testschlitten sein, welcher einen Fahrzeugsitz und Befestigungsmöglichkeiten für einen Gurt aufweist. Solche Testschlitten werden oft linear beschleunigt und dann abrupt abgebremst, um einen Aufprall zu simulieren. Testschlitten werden oft verwendet, um Kindersitze oder Gurte, Gurtschlösser, Gurtspanner usw. zu testen. Im Folgenden wird jeweils ein Fahrzeug erwähnt, wobei ein Testschlitten auch gemeint ist.

Die Schulter einer Testvorrichtung weist im Stand der Technik eine Schulteranordnung auf, welche meist aus einem Kunststoff gefertigt ist. Üblicherweise ist die Schulteranordnung in einem Stück gefertigt, beispielsweise als ein Stück gegossen. Die Schulteranordnung weist einen zur Wirbelsäule proximalen Bereich auf, welcher weitgehend parallel zur Wirbelsäule verläuft. Die Schulteranordnung weist einen zur Wirbelsäule distalen Bereich auf, welcher radial von der Wirbelsäule beabstandet ist und weitgehend radial zur Wirbelsäule verläuft.

In einer Studie "Effects of Shoulder-belt Slip on the Kinetics and Kinematics of the THOR" von Suzanne Tylko, Kathy Tang, François Giguere, and Alain Bussieres, 2018 IRCOBI Conference Proceedings, 12 - 14 September 2018 - Athens (Griechenland), wurde festgestellt, dass bei einer Schulteranordnung nach dem Stand der Technik Gefahr besteht, dass bei einem Aufprall der Gurt von der Schulter abrutscht und in einen Spalt zwischen Wirbelsäulenanordnung und proximalen Bereich der Schulteranordnung rutscht. Ist der Gurt derart verrutscht, so ist das Verhalten der Testvorrichtung bei einem Aufprall nicht mehr gleich dem eines menschlichen Körpers.

Aus DE102019216967A1 ist eine Schulteranordnung bekannt, welche ein oben erwähntes verrutschen des Gurtes vermeiden soll. Die Schulteranordnung ist aus zwei Teilen ausgeführt, wobei ein Schlüsselbeinabschnitt aus einem ersten wärmehärtenden Material gebildet ist, und ein Halsabschnitt aus einem zweiten wärmehärtenden Material gebildet ist. Der Halsabschnitt ist steifer als der Schlüsselbeinabschnitt. Halsabschnitt und Schlüsselbeinabschnitt sind ineinander gesteckt, wobei Flansche des Schlüsselbeinabschnitts in Schlitze des Halsabschnitts greifen. Dies verkompliziert die Montage der Schulteranordnung an der Testvorrichtung, da zwei Teile, Schlüsselbeinabschnitt und Halsabschnitt montiert werden oder ein vorheriger Montageschritt zum Fügen der zwei Teile nötig ist. Zudem besteht eine Schwachstelle im Bereich der Verbindung von Flanschen und Schlitzen, welche sich bei einem Aufprall voneinander lösen können.

Aufgabe der Erfindung ist eine Schulteranordnung bereitzustellen, welche die vorgenannten Nachteile umgeht. Eine weitere Aufgabe der Erfindung ist es eine Schulteranordnung bereitzustellen, welche ein Verrutschen eines Gurtes bei einem Aufprall vermeidet und einfach und effizient montierbar ist.

### Darstellung der Erfindung

Die Aufgabe wird durch die Merkmale der unabhängigen Ansprüche gelöst.

Die Erfindung betrifft eine anthropomorphe Testvorrichtung, kurz Testvorrichtung, wobei die Testvorrichtung eine Wirbelsäulenanordnung aufweist; wobei sich die Wirbelsäulenanordnung weitgehend entlang einer Wirbelsäulenachse erstreckt; wobei die Testvorrichtung mindestens eine Schlüsselbeinanordnungen aufweist; wobei die Testvorrichtung mindestens eine Oberarmanordnung aufweist; wobei sich die Schlüsselbeinanordnung weitgehend radial zur Wirbelsäulenanordnung erstreckt; wobei die Armanordnung von der Wirbelsäulenanordnung radial beabstandet ist; wobei die Testvorrichtung eine Schulteranordnung aufweist; wobei die Schulteranordnung mit der Schlüsselbeinanordnung verbunden ist; wobei die Schulteranordnung angrenzend an die Armanordnung angeordnet ist; wobei die Schulteranordnung einen zur Wirbelsäulenanordnung proximalen Bereich aufweist; wobei die Schulteranordnung einen zur Wirbelsäulenanordnung distalen Bereich aufweist; wobei die Schulteranordnung einen Gurtbereich aufweist; wobei der Gurtbereich zwischen proximalen Bereich und distalen Bereich angeordnet ist; und wobei die Elastizität des Gurtbereichs verschieden ist von der Elastizität des distalen Bereichs.

Die Schlüsselbeinanordnung ist mit einer Brustanordnung verbunden. Die Brustanordnung ist mit der Wirbelsäulenanordnung verbunden. Die Armanordnung ist mit der Schlüsselbeinanordnung verbunden.

Die Testvorrichtung wird in einem Fahrzeug verwendet, wobei das Fahrzeug eine Rückhaltevorrichtung aufweist. Die Rückhaltevorrichtung weist mindestens einen Gurt und einen Sitz auf. Die Testvorrichtung ist üblicherweise auf dem Sitz angeordnet, wobei der Gurt derart geführt ist, dass der Gurt im Kontakt mit der Schulteranordnung ist. Der Gurt kontaktiert die Schulteranordnung im Gurtbereich.

Die verschiedene Elastizität des Gurtbereich und des distalen Bereichs der Schulteranordnung der Testvorrichtung verhindert ein Abrutschen des Gurtes eines Fahrzeugs bei einem Aufprall des Fahrzeugs.

Das Abrutschen des Gurtes wird in einer ersten erfindungsgemässen Ausführungsform der Testvorrichtung verhindert, in dem der Gurtbereich eine niedrigere Elastizität aufweist als der distale Bereich. Eine niedrigere Elastizität bedeutet, dass der Gurtbereich steifer ist. Der Gurtbereich ist schlechter verformbar als der distale Bereich. Bei einem Aufprall des Fahrzeugs wird das Fahrzeug abrupt gestoppt. Durch die Träge Masse der Testvorrichtung wird diese gegen den Gurt gedrückt. Der Gurt übt eine Kraft auf die Testvorrichtung, im speziellen auf die Schulteranordnung im Gurtbereich aus. Durch die niedrigere Elastizität des Gurtbereichs wird ein mechanisches Umknicken oder ein mechanisches Falten des Gurtbereichs vermieden. Der Gurt verbleibt während des Aufpralls im Gurtbereich.

Das Abrutschen des Gurtes wird in einer zweiten erfindungsgemässen Ausführungsform der Testvorrichtung verhindert, indem der Gurtbereich eine höhere Elastizität aufweist als der distale Bereich. Eine höhere Elastizität bedeutet, dass der Gurtbereich weicher ist. Der Gurtbereich ist besser verformbar als der distale Bereich. Bei einem Aufprall des Fahrzeugs wird das Fahrzeug abrupt gestoppt. Durch die Träge Masse der Testvorrichtung wird diese gegen den Gurt gedrückt. Der Gurt übt eine Kraft auf die Testvorrichtung, im speziellen auf die Schulteranordnung im Gurtbereich aus. Durch die höhere Elastizität des Gurtbereichs sinkt der Gurt in den Gurtbereich ein. Dieses Einsinken bildet eine Vertiefung im Gurtbereich. Die Vertiefung wirkt als Führung für den Gurt. Ein seitliches Rutschen des Gurtes ist durch die Ränder der Vertiefung verhindert.

### Kurze Beschreibung der Zeichnungen

Im Folgenden wird die Erfindung beispielhaft unter Beizug der Figuren näher erklärt. Es zeigen
- Fig. 1: eine schematische Teilansicht einer Ausführungsform einer Testvorrichtung mit Schulteranordnung,
- Fig. 2: eine schematische Teilansicht einer Ausführungsform einer Testvorrichtung mit Schulteranordnung und über der Schulteranordnung angeordnetem Gurt,
- Fig. 3: eine schematische Teilansicht einer Schulteranordnung;
- Fig. 4: eine Schnittansicht einer schematischen Teilansicht einer Schulteranordnung,
- Fig. 5: eine schematische Darstellung einer Testvorrichtung in einem Fahrzeug,
- Fig. 6: eine schematische Darstellung einer Hohlform,
- Fig. 7: eine schematische Darstellung einer Ausführungsform einer Testvorrichtung, wobei nur die rechte Schulteranordnung und die Wirbelsäulenanordnung dargestellt sind.

### Wege zur Ausführung der Erfindung

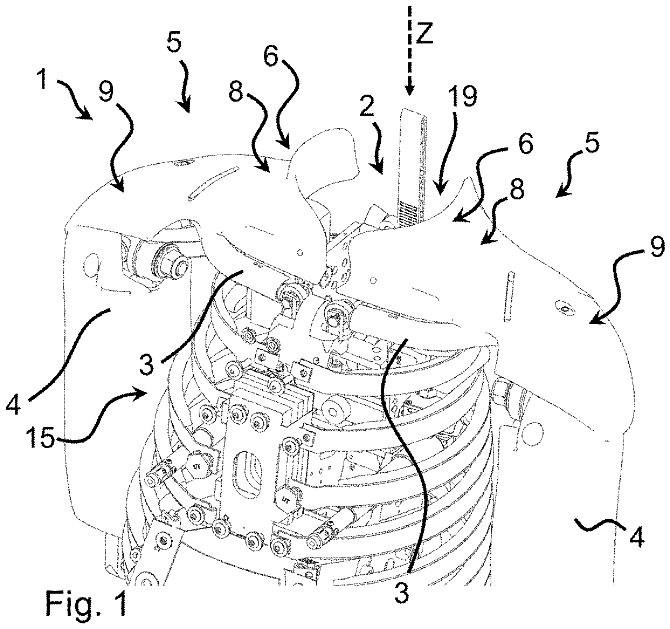

Fig. 1 zeigt eine schematische Teilansicht einer Ausführungsform einer Testvorrichtung 1 mit Schulteranordnung 5. Die Testvorrichtung weist eine Wirbelsäulenanordnung 2 auf. Die Wirbelsäulenanordnung 2 erstreckt sich weitgehend entlang einer Wirbelsäulenachse Z. Die Testvorrichtung 1 weist mindestens eine Schlüsselbeinanordnungen 3 auf. Die Testvorrichtung 1 weist zudem mindestens eine Armanordnung 4 auf. Da die Testvorrichtung einem menschlichen Körper nachempfunden ist und sich einem menschlichen Körper in Tests möglichst gleich verhalten soll, sind Schlüsselbeinanordnung 3 und Armanordnung 4 zur Wirbelsäulenanordnung 2 angeordnet wie ein Schlüsselbein zur Wirbelsäule und Arm in einem menschlichen Körper. Die Schlüsselbeinanordnung 3 ist mit der Brustanordnung 15 verbunden. Die Brustanordnung 15 ist mit der Wirbelsäulenanordnung 2 verbunden. Die Armanordnung ist mit der Schlüsselbeinanordnung verbunden. Die Schlüsselbeinanordnung 3 erstreckt sich weitgehend radial zur Wirbelsäulenanordnung 2. Die Armanordnung 4 ist von der Wirbelsäulenanordnung 2 radial beabstandet. Die Armanordnung 4 ist mit der Schlüsselbeinanordnung 3 verbunden. Die Schlüsselbeinanordnung 3 ist somit zwischen Wirbelsäulenanordnung 2 und Armanordnung 4 angeordnet und verbindet Wirbelsäulenanordnung 2 mit der Armanordnung 4.

Die Testvorrichtung 1 weist eine Schulteranordnung 5 auf. Die Schulteranordnung 5 ist mit der Schlüsselbeinanordnung 3 verbunden. Die Schulteranordnung 5 ist angrenzend an die Armanordnung 4 angeordnet. Die Schulteranordnung 5 weist einen zur Wirbelsäulenanordnung 2 proximalen Bereich 6 auf. Der proximale Bereich 6 ist der Bereich der Schulteranordnung 5, welcher der Wirbelsäulenanordnung 2 am nächsten ist. Im Vergleich zum menschlichen Körper stellt die Schulteranordnung 5 die Oberfläche der Schulter und den Übergang zum Hals dar, wobei die Schulteranordnung 5 einen Teil des Halses eines menschlichen Körpers nachbildet. Die Oberfläche der Schulteranordnung 5 überdeckt auch das Schlüsselbein. Der proximale Bereich 6 ist demnach ein Bereich der Schulteranordnung 5, welcher dem Hals eines menschlichen Körpers nachempfunden ist.

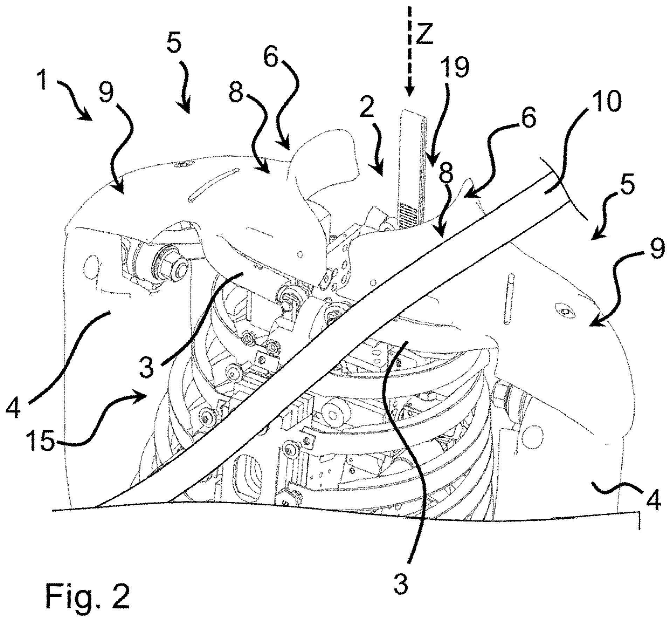

Die Schulteranordnung 5 weist einen zur Wirbelsäulenanordnung 2 distalen Bereich 9 auf. Im Vergleich zum menschlichen Körper stellt die Schulteranordnung 5 die Oberfläche der Schulter bis zum Übergang zum Oberarm dar. Der distale Bereich 9 ist daher der Bereich der Schulteranordnung 5, welcher am weitesten von der Wirbelsäulenordnung 2 entfernt ist. Der distale Bereich 9 ist damit im Vergleich zum menschlichen Körper der Bereich der Schulter, welcher das Schultergelenk überdeckt, wie in Figuren 1 und 2 gezeigt.

Die Schulteranordnung 5 weist einen Kunststoff auf. Die Schulteranordnung 5 ist zumindest teilweise aus einem Kunststoff ausgeführt. Ein Kunststoff kann beispielsweise ein Thermoplaste sein. Ein Thermoplaste ist durch Energiezufuhr weich und formbar. Thermoplaste sind durch Formverfahren in ein gewünschte Form bringbar und behalten nach dem Formverfahren ihre Form bei. Ein Kunststoff kann beispielsweise ein Duroplast sein. Duroplaste werden in einem Formverfahren geformt und behalten nach einem Härtungsprozess ihre Form bei. Der Härtungsprozess wird meist durch Erhitzen, Oxidationsmittel, energiereiche Strahlung oder Einsatz von Katalysatoren bewirkt.

Erfindungsgemäss weist die Schulteranordnung 5 einen Gurtbereich 8 auf. Der Gurtbereich 8 ist zwischen proximalen Bereich 6 und distalen Bereich 9 angeordnet. Zwischen ist hier explizit so zu verstehen, dass der Gurtbereich 8 nicht mit dem proximalen Bereich 6 überlappt. Radial von der Wirbelsäulenanordnung 2 aus betrachtet, erstreckt sich der Gurtbereich 8 nicht direkt vom Anfang, d.h. nächstliegenden Punkt der Schulteranordnung 5. Zwischen ist hier explizit so zu verstehen, dass der Gurtbereich 8 nicht mit dem distalen Bereich 9 überlappt. Radial von der Wirbelsäulenanordnung 2 aus betrachtet erstreckt sich der Gurtbereich 8 nicht bis zum Ende, d.h. dem weitgelegensten Punkt der Schulteranordnung 5.

Erfindungsgemäss ist die Elastizität des Gurtbereichs 8 verschieden ist von der Elastizität des distalen Bereichs 9. Dies hat den Vorteil, dass der Gurt 10 bei einem Aufprall im Gurtbereich 8 verbleibt und nicht in eine Lücke 19 zwischen Wirbelsäulenanordnung 2 und Schulteranordnung 5 rutscht, wie es bei einem Aufprall mit einer Schulteranordnung 5 ohne erfindungsgemässen Gurtbereich 8 geschehen kann.

Der Gurtbereich 8 ist in einer ersten Ausführungsform der Testvorrichtung 1 steifer als der distale Bereich 9. Wird die Testvorrichtung 1 für einen Test in einem Fahrzeug 12 mit einem Gurt 10 versehen, so verläuft der Gurt 10 über den Gurtbereich 8 der Schulteranordnung 5, wie in Fig. 2 schematisch dargestellt. Bei einem Aufprall des Fahrzeuges 12 wird die Testvorrichtung 1 auf Grund ihrer trägen Masse gegen den Gurt gedrückt. Der Gurtbereich 8 in der Schulteranordnung 5 verhindert eine starke Verformung oder eine mechanische Faltung der Schulteranordnung 5 in diesem Bereich. Der Gurt 10 bleibt daher im Gurtbereich und kann nicht in die Lücke 19 zwischen Wirbelsäulenanordnung 2 und Schulteranordnung 5 rutschen, wie es bei einem Aufprall mit einer Schulteranordnung 5 ohne Gurtbereich 8 geschehen kann.

Der Gurtbereich 8 ist vorzugsweise in der ersten Ausführungsform der Testvorrichtung 1 steifer als der proximale Bereich 6. So wird ein Abrutschen des Gurtes in Richtung der Armanordnung 4 verhindert.

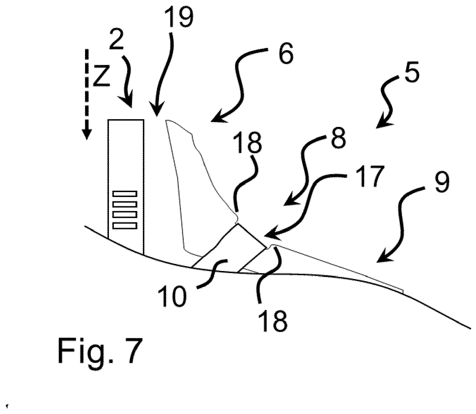

Der Gurtbereich 8 ist in der zweiten Ausführungsform der Testvorrichtung flexibler als der proximale Bereich 6. Wird die Testvorrichtung 1 für einen Test in einem Fahrzeug 12 mit einem Gurt 10 versehen, so verläuft der Gurt 10 über den Gurtbereich 8 der Schulteranordnung 5, wie in Fig. 2 schematisch dargestellt. Bei einem Aufprall des Fahrzeuges 12 wird die Testvorrichtung 1 auf Grund ihrer trägen Masse gegen den Gurt gedrückt. Durch die höhere Elastizität des Gurtbereichs 8 sinkt der Gurt 10 bei Aufprall in den Gurtbereich 8 ein. Dieses Einsinken bildet eine Vertiefung 17 im Gurtbereich 8. Die Vertiefung 17 wirkt als Führung für den Gurt 10, wie in Fig. 7 dargestellt. Fig. 7 zeigt eine schematische Darstellung einer Ausführungsform einer Testvorrichtung, wobei nur die rechte Schulteranordnung und die Wirbelsäulenanordnung dargestellt sind. Ein seitliches Rutschen des Gurtes ist durch die Ränder 18 der Vertiefung 17 erschwert. Ein Rand 18 ist spätestens beim Übergang des Gurtbereichs 8 in den proximalen Bereich 6 gegeben, da der proximale Bereich steifer ist als der Gurtbereich 8. Der Gurt 10 bleibt daher in Position und kann nicht in die Lücke 19 zwischen Wirbelsäulenanordnung 2 und Schulteranordnung 5 rutschen, wie es bei einem Aufprall mit einer Schulteranordnung 5 ohne Gurtbereich 8 geschehen kann.

Der Gurtbereich 8 ist vorzugsweise in der zweiten Ausführungsform der Testvorrichtung 1 flexibler als der distale Bereich 7. So wird ein Abrutschen des Gurtes in Richtung der Armanordnung 4 verhindert.

Eine verschiedene Elastizität zweier Bereiche ist im Rahmen dieses Dokuments gegeben, wenn die Elastizität des ersten Bereichs um mindestens 10% von der Elastizität eines zweiten Bereichs abweicht, mit welchem zweiten Bereich die Elastizität des ersten Bereichs verglichen wird.

Ein erster Bereich wird im Rahmen dieses Dokuments als steifer verstanden, wenn die Elastizität des ersten Bereichs um mindestens 10% höher ist als die Elastizität eines zweiten Bereichs, mit welchem zweiten Bereich die Elastizität des ersten Bereichs verglichen wird. Der erste Bereich ist beispielsweise in der ersten Ausführungsform der Erfindung der Gurtbereich 8. Der zweite Bereich ist beispielsweise in der ersten Ausführungsform der Erfindung der proximale Bereich 6 oder der distale Bereich 9.

Ein erster Bereich wird im Rahmen dieses Dokuments als flexibler verstanden, wenn die Elastizität des ersten Bereichs um mindestens 10% höher ist als die Elastizität eines zweiten Bereichs, mit welchem zweiten Bereich die Elastizität des ersten Bereichs verglichen wird. Der erste Bereich ist beispielsweise in der ersten Ausführungsform der Erfindung der proximale Bereich 6 und/oder der distale Bereich 9. Der zweite Bereich ist beispielsweise in der ersten Ausführungsform der Erfindung der Gurtbereich 8. Der Gurtbereich 8 erstreckt sich zwischen proximalen Bereich 6 und distalen Bereich 9 derart, dass proximaler Bereich 6 und distaler Bereich 9 beidseitig des Gurtbereichs 8 angeordnet sind.

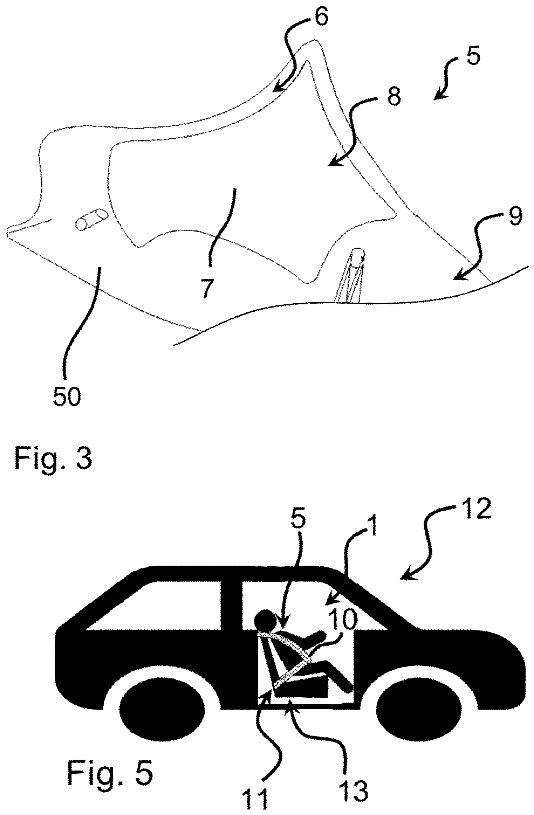

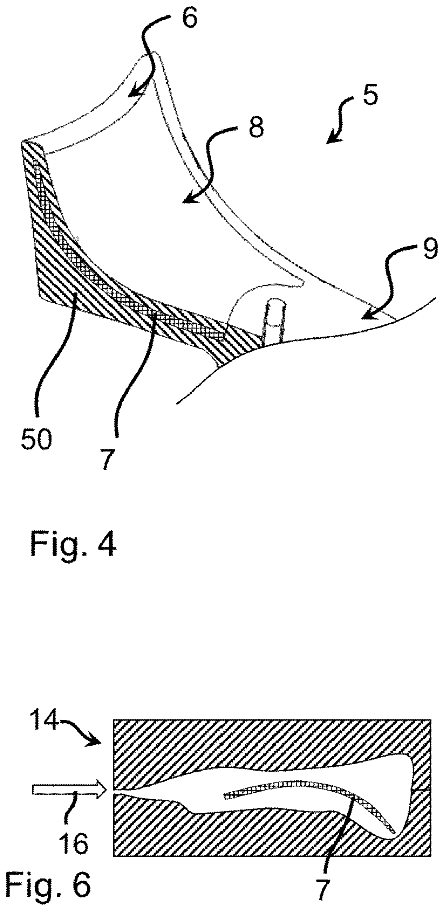

Bevorzugt weist die Schulteranordnung 5 einen Einleger 7 auf. Die Schulteranordnung 5 weist dann auch ein Schulterformteil 50 auf. Der Einleger 7 ist aus einem anderen Material gefertigt als das Schulterformteil 50. Dies ist in Fig. 3 und Fig. 4 gezeigt. Eine unterschiedliche Materialwahl erlaubt eine genauere Abstimmung der dynamischen Antwort des Schulterformteils 50 auf einen Aufprall. Insbesondere kann auf die Elastizität und damit die Verformbarkeit der Schulteranordnung 5 einfach Einfluss genommen werden.

Fig. 3 zeigt das Schulterformteil 50 in transparenter Darstellung, mit einem in das Schulterformteil 50 eingebetteten Einleger 7. Transparente Darstellung bedeutet, dass sowohl die vorderen, dem Betrachter zugewandten Strukturen sichtbar sind als auch die Strukturen auf der dem Betrachter abgewandten Seite der Schulteranordnung 5.

Das Material des Einlegers 7 weist eine Elastizität auf, welche verschieden von der Elastizität des Materials des Schulterformteils 50 ist.

In der ersten Ausführungsform der Testvorrichtung 1 weist das Material des Einlegers 7 eine niedrigere Elastizität auf als das Material des Schulterformteils 50. Dies hat den Vorteil, dass die Schulteranordnung 5 im Bereich des Einlegers 7 eine erhöhte Steifigkeit aufweist. Der Gurtbereich 8 ist daher einfach im Bereich realisierbar, in dem der Einleger 7 im Schulterformteil 50 positioniert ist.

In der zweiten Ausführungsform der Testvorrichtung 1 weist das Material des Einlegers 7 eine höhere Elastizität auf als das Material des Schulterformteils 50. Dies hat den Vorteil, dass die Schulteranordnung 5 im Bereich des Einlegers 7 eine erhöhte Flexibilität aufweist. Material mit einer erhöhten Verformbarkeit ist weicher und flexibler. Der Gurtbereich 8 der zweiten Ausführungsform der Testvorrichtung 1 ist daher einfach im Bereich realisierbar, in dem der Einleger 7 im Schulterformteil 50 positioniert ist.

In einer Ausführungsform ist das Schulterformteil 50 aus Polyurethan. Polyurethan ist einfach formbar. Dies kann Beispielsweise in einer Negativform geschehen. Polyurethan kann entweder in Form eines Duroplasts oder eines Thermoplasts vorliegen. Der jeweils flüssige Ausgangsstoff wird in einer Negativform des Schulterformteils 50 eingefüllt und härtet in der Negativform aus. Der Einleger 7 wird vor Einfüllen des Polyurethans in der Negativform positioniert. Das Merkmal dieser Ausführungsform ist sowohl mit der ersten Ausführungsform der Testvorrichtung 1 als auch mit der zweiten Ausführungsform der Testvorrichtung 1 vorteilhaft kombinierbar.

In einer bevorzugten Ausführungsform umschliesst das Schulterformteil 50 den Einleger 7 vollständig. Dies wird beispielsweise durch entsprechende Positionierung des Einlegers 7 in der Negativform erreicht. Dies hat den Vorteil, dass die Schulteranordnung 5 keine Nähte oder Kanten im Bereich aufweist, in dem der Einleger 7 in das Schulterformteil 50 eingelegt ist. An Nähten oder Kanten könnte ein Gurt hängen bleiben und so lokal starke Kräfte auf das Schulterformteil 50 ausüben. Zudem kann das Schulterformteil 50 derart ausgeführt sein, dass der Einleger 7 von aussen nicht sichtbar ist, wenn das Material des Schulterformteils 50 intransparent ist. Auch die äussere Struktur der Schulteranordnung 5 bleibt einheitlich. So ist die biomechanische Oberflächenbeschaffenheit der Schulteranordnung 5 einheitlich. Das Merkmal dieser Ausführungsform ist sowohl mit der ersten Ausführungsform der Testvorrichtung 1 als auch mit der zweiten Ausführungsform der Testvorrichtung 1 vorteilhaft kombinierbar.

Besonders bevorzugt ist der Einleger 7 derart innerhalb des Schulterformteils 50 angeordnet, dass der Gurtbereich 8 gebildet ist. Durch Form und Elastizität des Materials des Einlegers 7 ist der Gurtbereich 8 frei formbar. Das Merkmal dieser Ausführungsform ist sowohl mit der ersten Ausführungsform der Testvorrichtung 1 als auch mit der zweiten Ausführungsform der Testvorrichtung 1 vorteilhaft kombinierbar.

Besonders bevorzugt ist das Schulterformteil einstückig ausgeführt. Einstückig bedeutet, dass es aus einem Guss gegossen ist oder aus einem Vollmaterial hergestellt ist. Das Merkmal dieser Ausführungsform ist sowohl mit der ersten Ausführungsform der Testvorrichtung 1 als auch mit der zweiten Ausführungsform der Testvorrichtung 1 vorteilhaft kombinierbar.

Besonders bevorzugt ist in der ersten Ausführungsform der Testvorrichtung 1 das Material des Einlegers 7 steifer als das Material des Schulterformteils 50. So ist ein Einleger 7 bei gleicher Geometrie steifer als das Material des Schulterformteils 50. Der Gurtbereich 8 kann daher bezüglich aktuellem Stand der Technik nach Tylko et al. gleichbleibender äusseren Geometrie der Schulteranordnung 5 einfach im Bereich des Einlegers 7 ausgeführt sein.

Besonders bevorzugt ist in der zweiten Ausführungsform der Testvorrichtung 1 das Material des Einlegers 7 flexibler als das Material des Schulterformteils 50. So ist ein Einleger 7 bei gleicher Geometrie flexibler als das Material des Schulterformteils 50. Der Gurtbereich 8 kann daher bezüglich aktuellem Stand der Technik nach Tylko et al. gleichbleibender äusseren Geometrie der Schulteranordnung 5 einfach im Bereich des Einlegers 7 ausgeführt sein.

Eine Testvorrichtung 1 nach vorgehender Beschreibung wird in einem Fahrzeug 12 verwendet, wie in Fig. 5 schematisch dargestellt. Das Fahrzeug 12 weist eine Rückhaltevorrichtung 11 auf. Die Rückhaltevorrichtung 11 umfasst mindestens einen Gurt 10. Das Fahrzeug 12 weist mindestens einen Sitz 13 auf. Die Testvorrichtung 1 ist auf dem Sitz 13 angeordnet. Der Gurt 10 ist derart angeordnet, dass der Gurt 10 im Kontakt mit der Schulteranordnung 5 ist. Der Gurt 10 kontaktiert die Schulteranordnung 5 im Gurtbereich 8.

Im Fall eines Aufpralls der Fahrzeugs 12 verhindert der Gurtbereich 8 der ersten Ausführungsform der Testvorrichtung 1 vorteilhaft ein Verformen oder eine mechanische Faltung der Schulteranordnung 5. Dadurch wird ein Verrutschen des Gurtes 10 verhindert.

Im Fall eines Aufpralls der Fahrzeugs 12 verhindert der Gurtbereich 8 der zweiten Ausführungsform der Testvorrichtung 1 vorteilhaft ein Verrutschen des Gurtes durch Formen einer Vertiefung 17 im Gurtbereich 8 der Schulteranordnung 5. Dadurch wird ein Verrutschen des Gurtes 10 verhindert.

Besonders bevorzugt umfasst die Rückhaltevorrichtung 12 ein 3-Punk-Gurt oder ein Schultergurt oder ein Fünf-Punkt-Gurt. Diese Varianten eines Gurtes 10 sind jeweils zumindest teilweise über der Schulteranordnung 5 angeordnet, wenn eine Testvorrichtung 1 mit diesem Gurt 10 in einem Fahrzeug 12 angeordnet ist.

Ein derzeit bevorzugtes Herstellungsverfahren einer Schulteranordnung 5 für eine Testvorrichtung 1 umfasst den Schritt, dass ein Einleger 7 bereitgestellt wird. In einem weiteren Schritt wird der Einleger 7 in eine Hohlform 14 eingelegt, wie in Fig. 6 dargestellt. Eine Hohlform 14 ist beispielsweise eine Hohlform 14 einer Spritzgussmaschine. Eine Hohlform 14 ist auch als Negativform oder Gussform bekannt. In einem weiteren Schritt wird die Hohlform 14 mit Gussmaterial 16 aufgefüllt. Das Gussmaterial 16 ist bevorzugt ein Kunststoff. Beim Spritzgiessen werden üblicherweise bevorzugt Duroplaste oder Thermoplaste verwendet. Besonders bevorzugt ist das Gussmaterial Polyurethan. Die Hohlform 14 wird in einem weiteren Schritt derart mit Gussmaterial 16 gefüllt, sodass das Gussmaterial 16 den Einleger 7 zumindest teilweise umschliesst. In einer bevorzugten Ausführungsform wird die Hohlform 14 derart mit Gussmaterial 16 gefüllt, sodass das Gussmaterial 16 den Einleger 7 umschliesst. Das Gussmaterial 16 bildet so das Schulterformteil 50, welches mit Einleger 7 einen Gurtbereich 8 ausbildet.

Das Herstellungsverfahren ist zur Herstellung einer Schulteranordnung 5 für die erste Ausführungsform der Testvorrichtung 1 geeignet.

Das Herstellungsverfahren ist auch zur Herstellung einer Schulteranordnung für die zweite Ausführungsform der Testvorrichtung 1 geeignet.

Besonders vorteilhaft ist der Einleger 7 mittels 3D Druck hergestellt. So kann die Formgebung des Einlegers 7 gezielt der Formgebung der Schulteranordnung 5 derart angepasst sein, dass das der Einleger 7 zumindest teilweise in der gleichen Formgebung wie die Schulteranordnung 5 ausgeführt ist. So kann eine Schicht des Schulterformteils 50 im Gurtbereich 8, welches den Einleger 7 überdeckt, mit konstanter Dicke ausgeführt sein.

In einer Ausführungsform weist der Einleger 7 Acrylnitril-Butadien-Styrol-Copolymere auf.

Bevorzugt weist das Material des Einlegers 7 in der ersten Ausführungsform der Testvorrichtung 1 ein E-Modul zwischen 1000 MPa (Megapascal) und 2000 MPa nach ASTM D638 auf.

Die in dieser Schrift offenbarte erste Ausführungsform der Testvorrichtung 1 ist nicht mit der zweiten Ausführungsform der Testvorrichtung 1 kombinierbar. Es sind jedoch ohne weiteres andere beschriebene Ausführungsformen der Testvorrichtung 1 mit jeweils der erste Ausführungsform der Testvorrichtung 1 und/oder der zweiten Ausführungsform der Testvorrichtung 1 kombinierbar.

### Bezugszeichenliste

- Z: Wirbelsäulenachse
- 1: Testvorrichtung
- 2: Wirbelsäulenanordnung
- 3: Schlüsselbeinanordnung
- 4: Armanordnung
- 5: Schulteranordnung
- 6: Proximaler Bereich
- 7: Einleger
- 8: Gurtbereich
- 9: Distaler Bereich
- 10: Gurt
- 11: Rückhaltevorrichtung
- 12: Fahrzeug
- 13: Sitz
- 14: Hohlform
- 15: Brustanordnung
- 16: Gussmaterial
- 17: Vertiefung
- 18: Rand
- 19: Lücke
- 50: Schulterformteil

## Patentansprüche

1. Anthropomorphe Testvorrichtung (1), kurz Testvorrichtung (1), wobei die Testvorrichtung (1) eine Wirbelsäulenanordnung (2) aufweist; wobei sich die Wirbelsäulenanordnung (2) weitgehend entlang einer Wirbelsäulenachse (Z) erstreckt; wobei die Testvorrichtung (1) mindestens eine Schlüsselbeinanordnung (3) aufweist; wobei die Testvorrichtung (1) mindestens eine Armanordnung (4) aufweist; wobei sich die Schlüsselbeinanordnung (3) weitgehend radial zur Wirbelsäulenanordnung (2) erstreckt; wobei die Armanordnung (4) von der Wirbelsäulenanordnung (2) radial beabstandet ist; wobei die Testvorrichtung (1) eine Schulteranordnung (5) aufweist; wobei die Schulteranordnung (5) mit der Schlüsselbeinanordnung (3) verbunden ist; wobei die Schulteranordnung (5) angrenzend an die Armanordnung (4) angeordnet ist; wobei die Schulteranordnung (5) einen zur Wirbelsäulenanordnung (2) proximalen Bereich (6) aufweist; wobei die Schulteranordnung (5) einen zur Wirbelsäulenanordnung (2) distalen Bereich (9) aufweist; **dadurch gekennzeichnet, dass** die Schulteranordnung (5) einen Gurtbereich (8) aufweist; dass der Gurtbereich (8) zwischen proximalen Bereich (6) und distalen Bereich (9) angeordnet ist; und dass die Elastizität des Gurtbereichs (8) verschieden ist von der Elastizität des distalen Bereich (9).

2. Testvorrichtung (1) nach einem der Ansprüche 2 bis 4, **dadurch gekennzeichnet, dass** die Schulteranordnung (5) einen Einleger (7) aufweist; dass die Schulteranordnung (5) ein Schulterformteil (50) aufweist; dass der Einleger (7) aus einem anderen Material gefertigt ist als das Schulterformteil (50).

3. Testvorrichtung (1) nach Anspruch 2, **dadurch gekennzeichnet, dass** der Gurtbereich (8) steifer ist als der distale Bereich (9); und/oder dass der Gurtbereich (8) steifer ist als der proximale Bereich (6).

4. Testvorrichtung (1) nach Anspruch 2, **dadurch gekennzeichnet, dass** der Gurtbereich (8) flexibler ist als der proximale Bereich (6); und/oder dass der Gurtbereich (8) flexibler ist als der distale Bereich (9).

5. Testvorrichtung (1) nach einem der Ansprüche 2 bis 4, **dadurch gekennzeichnet, dass** die Schulteranordnung (5) zumindest teilweise aus Kunststoff ausgeführt ist.

6. Testvorrichtung (1) nach einem der Ansprüche 2 bis 5, **dadurch gekennzeichnet, dass** die Elastizität des Materials des Einlegers (7) verschieden ist von der Elastizität des Materials des Schulterformteils (50).

7. Testvorrichtung (1) nach einem der Ansprüche 2 bis 6, **dadurch gekennzeichnet, dass** das Schulterformteil (50) vorzugweise aus Polyurethan ausgeführt ist.

8. Testvorrichtung (1) nach einem der Ansprüche 2 bis 7, **dadurch gekennzeichnet, dass** das Schulterformteil (50) den Einleger (7) vollständig umschliesst.

9. Testvorrichtung (1) nach einem der Ansprüche 2 bis 8, **dadurch gekennzeichnet, dass** der Einleger (7) derart innerhalb des Schulterformteils (50) angeordnet ist, dass es den Gurtbereich (8) bildet.

10. Testvorrichtung (1) nach einem der Ansprüche 2 bis 9, **dadurch gekennzeichnet, dass** das Schulterformteil (50) einstückig ausgeführt ist.

11. Testvorrichtung (1) nach einem der Ansprüche 2 bis 10, **dadurch gekennzeichnet, dass** das Material des Einlegers (7) ein E-Modul zwischen 1000 MPa und 2000 MPa aufweist.

12. Verwendung einer Testvorrichtung (1) nach einem der vorgehenden Ansprüche in einem Fahrzeug (12); wobei das Fahrzeug (12) eine Rückhaltevorrichtung (11) aufweist; welche Rückhaltevorrichtung (11) mindestens einen Gurt (10) aufweist; wobei das Fahrzeug (12) mindestens einen Sitz (13) aufweist; wobei die Testvorrichtung (1) auf dem Sitz (13) angeordnet ist; wobei der Gurt (10) derart geführt ist, dass der Gurt (10) im Kontakt mit der Schulteranordnung (5) ist; **dadurch gekennzeichnet, dass** der Gurt (10) die Schulteranordnung (5) im Gurtbereich (8) kontaktiert.

13. Verwendung einer Testvorrichtung (1) nach Anspruch 12 in einem Fahrzeug (12) ; wobei die Rückhaltevorrichtung (11) ein 3-Punk-Gurt (10) umfasst oder wobei die Rückhaltevorrichtung (11) ein Schultergurt (10) umfasst oder wobei die Rückhaltevorrichtung (11) ein Fünf-Punkt-Gurt (10) umfasst.

14. Verfahren zur Herstellung einer Schulteranordnung (5) für eine Testvorrichtung (1) nach einem der Ansprüche 3 bis 11; **dadurch gekennzeichnet, dass** das Verfahren folgende Schritte aufweist:
a. der Einleger (7) wird bereitgestellt;
b. der Einleger (7) wird in eine Hohlform (14) eingelegt;
c. die Hohlform (14) wird mit Gussmaterial (16) aufgefüllt, sodass das Gussmaterial (16) den Einleger (7) umschliesst.

15. Verfahren zur Herstellung einer Schulteranordnung (5) für eine Testvorrichtung (1) nach dem vorgehenden Anspruch; **dadurch gekennzeichnet, dass** der Einleger (7) mittels 3D Druck hergestellt wird.
